Europäisches Patentamt

(19) European Patent Office

Office européen des brevets

(11) Publication number: **0 301 778 B1**

(12) # EUROPEAN PATENT SPECIFICATION

(45) Date of publication of patent specification :
**21.11.91 Bulletin 91/47**

(21) Application number : **88306794.4**

(22) Date of filing : **25.07.88**

(51) Int. Cl.⁵ : **B60C 9/00**, B60C 9/08,
B60C 9/18

(54) **Motor cycle tyre.**

(30) Priority : **28.07.87 JP 187970/87**

(43) Date of publication of application :
**01.02.89 Bulletin 89/05**

(45) Publication of the grant of the patent :
**21.11.91 Bulletin 91/47**

(84) Designated Contracting States :
**DE FR IT**

(56) References cited :
**DE-A- 2 821 041**
**GB-A- 2 120 179**

(73) Proprietor : **SUMITOMO RUBBER**
**INDUSTRIES, CO. LTD**
**No. 1-1, Tsutsui-cho 1-chome**
**Chuo-ku Kobe-shi Hyogo-ken 651 (JP)**

(72) Inventor : **Noma, Hiroyuki**
**16-3, Suzurandai Kitamachi 3-chome Kita-ku**
**Kobe-shi Hyogo (JP)**

(74) Representative : **Stewart, Charles Geoffrey**
**SP TYRES UK LIMITED Tyre Technical**
**Division**
**Fort Dunlop Birmingham B24 9QT (GB)**

## Description

The present invention relates to · motor-cycle tyre and more particularly to a radial tyre for motor-cycles, which has good high speed steering stability, and in which ply separation in the breaker edge regions is lessened.

Recently, opportunities to run vehicles at high speed have increased still further due to improved road conditions, and good high speed characteristics are required for motor-cycle tyres.

The tyres which have been mainly used on such motor-cycles, are cross-ply tyres in which carcass ply cords are arranged at an angle of 25 to 45 degrees to the tyre circumferential direction so that the cords of each ply cross with those of the next ply. The reason is that motor-cycles basically differ from four-wheeled vehicles such as passenger cars particularly in behaviour when cornering. In order to turn, the motor-cycle has to be inclined (to give a large camber angle), by which a force (camber thrust) parallel to the road surface is produced in the same direction as that of the inclination of the machine, and which force acts on the tyre and balances with the centrifugal force thereon. Thus motor-cycle tyres are required to have characteristics which provide a steady camber thrust. Accordingly, carcasses of the above-mentioned cross-ply construction have been used for motor-cycle tyres to provide the lateral rigidity needed to maintain the camber thrust. So far carcasses of radial construction with resultant poor lateral rigidity have not been successfully used from the above-mentioned points of view.

Cross-ply tyres, however, have further drawbacks in that lateral vibrations (of a weave mode) due to the relationships between the lateral rigidity of the tyre and its cornering power, are liable to occur during high speed straight running and in general, wear resistance is poor. Accordingly, measures to increase the rigidity of the tyre, for example, to increase the number of plies in the carcass, to vary the angles of the carcass ply cords and the likes, have been taken as countermeasures. It is, however, very difficult to completely remove the drawbacks thereof as far as the cross-ply construction is employed.

Recently, therefore, it has been proposed to use radial ply tyres to try to solve the above-mentioned drawbacks of the conventional cross-ply construction. However, it is found that when a radial ply construction is applied to motor-cycle tyres, separation of breaker edge portions from the surrounding rubber frequently occurs unlike passenger car tyres, for the following reasons.

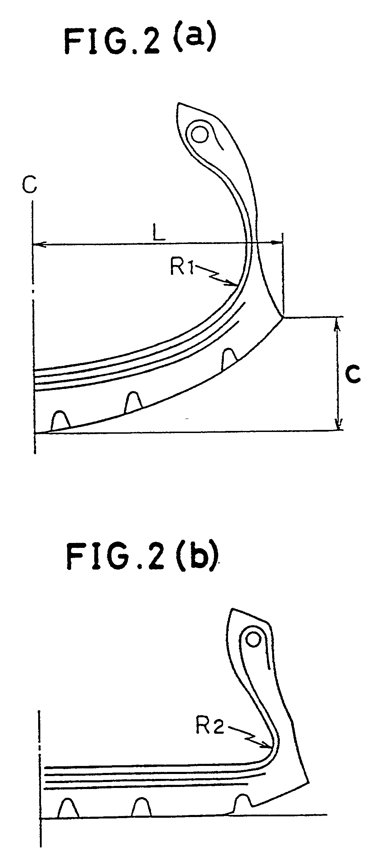

In motor-cycle tyres, typically as shown in Fig. 2(a), the radius of curvature of the tread is small, that is, the camber value C/L is large. The breaker reinforcing the tread comprises at least one ply of cords extending across the whole width of the tread and so the tension in the breaker cords in the tread centre region is different from those in the tread edge regions. As a result, stress is concentrated in the breaker edge regions.

Further, the tread is subjected to repeated deformation from the tyre unloaded or free state of Fig. 2(a) to the loaded or ground contacting state of Fig. 2(b) and vice versa. When the tread is deformed into the ground contacting state from the free state, the radius of curvature of the inner surface of the tyre shoulder is decreased to R2 (Fig. 2(b)) from R1 (Fig. 2(a)). As a result, shear stress is generated on the breaker edges because they are located in such regions.

It has also been proposed to use low elasticity modulus cords, such as nylon cords, in place of steel cords generally used for the breaker cords of radial tyres. In this case, however, due to the resulting low rigidity of the breaker, the steering stability is poor.

A tyre according to the preambule of claim 1 is known, e.g. from GB-A-2120179.

It is therefore, an object of the present invention to provide a radial tyre for motor-cycles, in which the above-mentioned problems are solved, and ply-separation in the edges of the breaker is reduced, and which has excellent steering stability in high speed running.

According to the present invention a motorcycle tyre comprises a pair of bead cores disposed one in each of the beads, and a carcass comprising radially arranged organic fibre cords the edges thereof being turned up around the bead cores, a tread disposed radially outside said carcass, a breaker comprising organic fibre cords disposed between said carcass and said tread, and a bead apex made of rubber having a JIS-A hardness of 65 to 95 degrees disposed between the carcass main portion and each of the carcass turned up portions, said breaker extending over almost the entire width of the tread, said bead apex extending from each bead core radially outwardly into the sidewall region of the tyre, characterised in that the fibre cords of the carcass have a modulus of tensile elasticity of 500 to 1500 Kp/mm$^2$, the fibre cords of the breaker have a modulus of tensile elasticity of 200 to 1000 Kp/mm$^2$, and said bead apex extends to a zone overlapped with an edge part of the breaker.

An embodiment of the present invention will be described, by way of example only, with reference to the accompanying drawings, in which :

Figure 1 is a cross sectional part view of a tyre, and

Figures 2(a) and (b) are schematic cross sectional part views showing the unloaded state and loaded

2

ground contacting state of the tyre respectively.

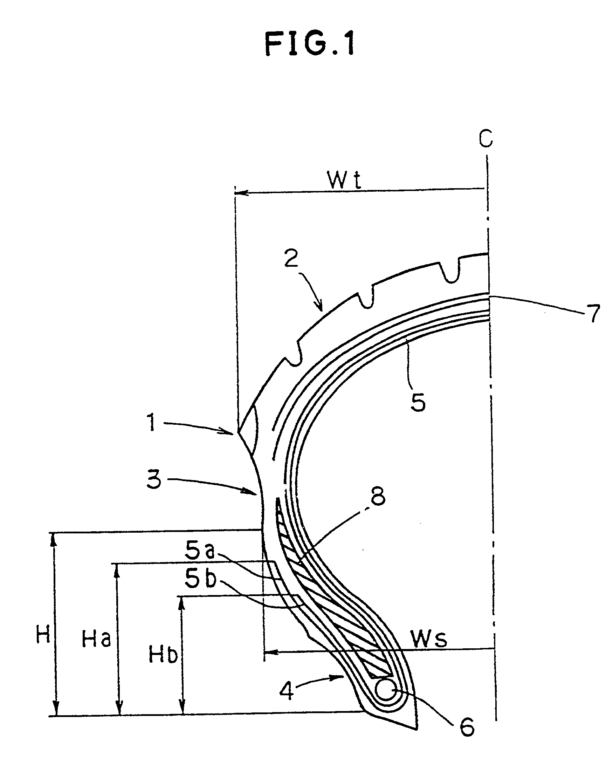

In Fig. 1, a tyre 1 has a tread 2, sidewalls 3 extending radially inwardly from the edges of the tread 2, and bead regions 4 located radially inward of the sidewalls 3. The tyre 1 also comprises a pair of bead cores 6 one provided in each bead region 4, a pair of bead apexes 8 one disposed in each bead region 4, a carcass 5 extending between the bead regions 4, and a breaker 7 between the carcass 5 and the tread 2.

The tread 2 on the carcass 5 extends from the equatorial plane of the tyre toward each side thereof so that the tread width Wt exceeds the maximum width Ws in the sidewall regions. The outer profile of the tread is substantially parallel to the contour of the carcass 5, so that when the motor-cycle and tyre are tilted the required camber thrust is generated.

The carcass 5 comprises two plies of cords both of which are turned up around the bead cores 6 from the inside to the outside thereof. Each turnup 5a, 5b thereof is terminated in a region including the bead region 4 and the sidewalls 3.

Preferably, one carcass ply turnup 5a is extended beyond the edge of the other carcass ply turnup 5b, which is located axially inside the turnup 5a, so as to completely cover the edge of the turnup 5b whereby stress concentration on the edge of the carcass ply turnup 5b is mitigated.

Furthermore, to reinforce the sidewall 3, the heights Hb and Ha of the axially inner turnup 5b and the axially outer turnup 5a from the bead base, are respectively set in the ranges of 55 to 65% of and 70 to 150% respectively of the height H of the above-mentioned maximum width point (Ws) in the sidewall.

The cords of the carcass are radially arranged, where "radially" means that the cords are arranged at an angle of 0 to 20 degress to the radial direction of the tyre. If the angle is more than 20 degrees, the tyre cannot display the excellent high speed characteristics of radial tyres.

Furthermore, the cords of the carcass are made of organic fibre, such as nylon, polyester or rayon, having a modulus of tensile elasticity of 500 to 1500 Kp/mm². In the example the cords have a thickness of 1000 to 2000 denier and they are embedded parallel to each other in coating rubber having a 100% modulus of 25 to 75 Kp/cm² at a cord density of 30 to 60 cords per 5 cm width.

In the tyre shown in Fig. 1 the edges of each carcass ply (5) are turned up outwardly around the bead cores (6) as described above. The carcass (5) in the present invention is, however, able alternatively, to employ (a) a structure in which the edges of the carcass ply are turned up around the bead cores from the outside to the inside thereof or (b) a combination structure of the former two.

The breaker 7 is composed of plies of rubber coated parallel cords, including at least one ply the width of which is substantially equal to the width Wt of the tread 2.

The cords of the breaker 7 are organic fibre cords having a modulus of tensile elasticity equal to or larger than that of the carcass ply cords. The modulus is preferably in the range of 200 to 1000 Kp/mm², for example, polyester cords, rayon cords, nylon cords or the likes. Preferably nylon cords are used. In the case where 1000 to 2000 denier nylon fibre cords are used for the breaker cords, the cords are preferably embedded parallel to each other in rubber having a 100% modulus of 30 to 80 Kp/cm² and more preferably 35 to 65 Kgf/sq.cm, with 30 to 55 cords/5 cm width.

As mentioned above, by using polyester cords or rayon cords which have a relatively high modulus of elasticity as the carcass cords, and using organic fibre cords, preferably nylon cords, having a modulus of elasticity smaller than that of the conventionally used steel cords as the breaker cords, the tyre as a whole is made more uniform in rigidity. As a result, the stress concentration due to repeated deformation during running is alleviated in the whole of tyre, and accordingly ply separation in the edges of the breaker is prevented. Furthermore, the resultant decrease in rigidity of the tread due to the relatively low modulus breaker cords is compensated by the carcass reinforced by its high modulus cords, so that steering stability is maintained. By using polyester cords for the carcass ply, the cord path is made more uniform and as a result, the ride feel is improved and tyre growth and decrease in tyre rigidity accompanied by temperature increase during running are lessened.

The cords of each ply are arranged at an angle of 5 to 30 degrees, and more preferably 10 to 25 degrees, with respect to the circumferential direction of the tyre. If the cord angle is too small tread stiffness is increased, and as a result impacts caused by pebbles on the road and roughness of the road are felt strongly by the driver. Also running stability as well as the ride comfort of the motor-cycle may be impaired. On the other hand, too large an angle impairs steering stability in high speed running.

The bead apex 8 made of hard rubber having a JIS-A hardness of 65 to 95 degrees, is disposed between the main carcass 5 and carcass turnups 5a and 5b in each bead region. Each bead apex 8 extends decreasing in thickness from the bead core 6 radially outwardly into the sidewall to a zone overlapped with the edge part of the breaker 7, so that the lateral stiffness in the region from the bead region to the sidewall is increased.

The present invention is preferably applied to motor-cycle tyres of which the camber value is more than 0.2, more preferably more than 0.3. The camber value is, as shown in Fig. 2(a), defined as the ratio (C/L) of the vertical distance C between the tread edge and the tread centre to the distance L of the tread edge and

EP 0 301 778 B1

the tread centre to the distance L of the tread edge from the equatorial plane of tyre.

As working examples of the present invention, 140/80-70 rear motor-cycle tyres having a structure similar to that shown in Fig. 1 were manufactured by way of trial.

The detailed specifications thereof are shown in Table 1.

The vibration naturally generating speed was evaluated in a feel test on a highway by a skilled test rider.

The test for durability was performed according to a test procedure specified in the JATMA Safety Standards for Automobile Tyres. That is, while the tyre is run at 80 km/h, both the tyre and the running time are increased step by step as follows : 100% load for 4 hours as the first step, 110% load for 6 hours as the second step, and 115% load for 24 hours as the third step, and then the tyre is continue running under 200% load to failure (separation between carcass and breaker). The running time from the end of third step to the time of tyre failure is measured.

The motor-cycle used in the field test was a HONDA VF1000R provided with a 120/180V16 cross ply tyre on the front wheel, and each test tyre of Table 1 was mounted on the rear wheel, and then the performance thereof was evaluated.

The results of the above tests are shown in Table 2.

4

TABLE 1

| TYRE | Ex.1 | Ex.2 | Ex.3 | Ex.4 | Ref.1 | Ref.2 |
|---|---|---|---|---|---|---|
| CAMBER VALUE | 0.30 | 0.30 | 0.30 | 0.30 | 0.30 | 0.30 |
| **CARCASS** | | | | | | |
| Construction | Radial | Radial | Radial | Radial | Radial | Radial |
| Number of plies | 2 | 2 | 2 | 2 | 2 | 2 |
| Cord angle *1 (deg.) | 88 | 88 | 88 | 88 | 88 | 88 |
| Cord material | Polyester | Polyester | Polyester | Rayon | Nylon | Polyester |
| Modulus of elasticity (kgf/sq.cm) | 800 | 800 | 1000 | 830 | 200 | 800 |
| Denier | 2/1260d | 2/1260d | 2/1260d | 2/1260d | 2/1260d | 2/1260d |
| 100% Modulus of coating rubber (kgf/sq.cm) | 50 | 50 | 50 | 50 | 50 | 50 |
| Cord density (cords/5cm) | 50 | 50 | 50 | 50 | 50 | 50 |
| **BREAKER** | | | | | | |
| Width (mm) | 160/146 | 160/146 | 160/146 | 160/146 | 160/146 | 160/146 |
| Number of plies | 2 | 2 | 2 | 2 | 2 | 2 |
| Cord material | Nylon | Polyester | Nylon | Nylon | Nylon | Steel 1x4(0.25) |
| Modulus of elasticity (kgf/sq.mm) | 200 | 800 | 200 | 200 | 200 | |
| Denier | 2/1890d | 2/1890d | 2/1890d | 2/1890d | 2/1890d | 2/1890d |
| Cord angles of 1st and 2nd plies (deg.) | 22,-22 | 22,-22 | 22,-22 | 22,-22 | 22,-22 | 22,-22 |
| 100% Modulus of coating rubber (kgf/sq.cm) | 40 | 40 | 40 | 40 | 40 | 40 |
| Cord density (cords/5cm) | 45 | 45 | 45 | 45 | 45 | 45 |
| **BEAD APEX** | | | | | | |
| JIS hardness (deg.) | 95 | 95 | 95 | 95 | 95 | 95 |
| Height *2 (mm) | 70 | 70 | 70 | 70 | 70 | 70 |

*1: to the circumferential direction of tyre
*2: from bead base

EP 0 301 778 B1

TABLE 2

| Tyre | Ex.1 | Ex.2 | Ex.3 | Ex.4 | Ref.1 | Ref.2 |
|---|---|---|---|---|---|---|
| **FIELD TEST** | | | | | | |
| Vibration naturally generating speed (km/h) | 200 | 200 | 200 | 200 | 190 | 170 |
| Vibration damping property after disturbance D=damped U=undamped | D | D | D | D | D | D |
| Durability (hrs) | 115 | 140 | 110 | 125 | 110 | 90 |

As described above, according to the present invention, the motor-cycle tyre is provided with a carcass of a radial structure, and to make uniform the rigidity in the whole of the tyre, organic fibre cords having a modulus of elasticity in the specific range are used for the carcass and the breaker so that ply separation in the breaker edge regions is effectively prevented.

Furthermore, the tyre is provided with bead apexes made of hard rubber and extending radially outwardly into the sidewall for the beads so that the lateral stiffness of the tyre is increased, and a drawback of the conventional radial tyre is eliminated. As a result, camber thrust is increased while providing to the rider stable cornering.

## Claims

1. A motorcycle tyre comprising a pair of bead cores (6) disposed one in each of the beads (4), and a carcass (5) comprising radially arranged organic fibre cords, the edges (5a, 5b) thereof being turned up around the bead cores (6), a tread (2) disposed radially outside said carcass (5), a breaker (7) comprising organic fibre cords disposed between said carcass (5) and said tread (2), and a bead apex (8) made of rubber having a JIS-A hardness of 65 to 95 degrees disposed between the carcass main portion and each of the carcass turned up portions (5a, 5b), said breaker (7) extending over almost the entire width of the tread (2), said bead apex (8) extending from each bead core (6) radially outwardly into the sidewall region (3) of the tyre characterized in that the fibre cords of the carcass (5) have a modulus of tensile elasticity of 500 to 1500 Kp/mm$^2$, the fibre cords of the breaker (7) have a modulus of tensile elasticity of 200 to 1000 Kp/mm$^2$, and said bead bend apex (8) extends to a zone overlapped with an edge part of the breaker.

2. A tyre according to claim 1 characterised in that the carcass cords are polyester cords or rayon cords.

3. A tyre according to claim 1 characterised in that the modulus of tensile elasticity of the carcass cords is larger than that of the breaker cords.

## Patentansprüche

1. Motorradreifen, der umfaßt ein Paar Wulstkerne (6), die jeweils einzeln in jedem Wulst (4) angeordnet sind, und eine Karkasse (5) aus radial angeordneten Korden organischer Fasern, deren Kanten (5a, 5b) um die Wulstkerne (6) nach oben zurückgeschlagen sind, einen radial außerhalb der Karkasse (5) angeordneten Laufstreifen (2), einen Gürtel (7), der organische Faserkorde umfaßt und zwischen der Karkasse (5) und dem Laufstreifen (2) angeordnet ist, und einen Wulstreiter (8) aus Gummi mit einer Härte nach JIS-A von 65 bis 95 Grad, der zwischen dem Karkass-Hauptabschnitt und jedem nach oben zurückgeschlagenen Karkassabschnitt (5a, 5b) angeordnet ist, wobei der Gürtel (7) sich fast über die gesamte Breite des Laufstreifens (2) erstreckt, der Wulstreiter (8) von jedem Wulstkern (6) radial nach außen in den Seitenwandbereich (3) des Reifens erstreckt, dadurch gekennzeichnet, daß die Faserkorde der Karkasse (5) einen Zugelastizitäts-Modul von 500

6

EP 0 301 778 B1

bis 1500 kp/mm$^2$ besitzen, die Faserkorde des Gürtels (7) einen Zugelastizitätsmodul von 200 bis 1000 kp/mm$^2$ besitzen und der Wulstreiter (8) sich bis zu einer durch einen Kantenabschnitt des Gürtels überdeckten Zone erstreckt.

2. Reifen nach Anspruch 1, dadurch gekennzeichnet, daß die Karkasskorde Polyesterkorde oder Reyonkorde sind.

3. Reifen nach Anspruch 1, dadurch gekennzeichnet, daß der Zugelastizitätsmodul der Karkasskorde größer als der der Gürtelkorde ist.

## Revendications

1. Pneumatique pour motocyclette, comprenant deux tringles (6) disposées chacune dans l'un des talons (4), et une carcasse (5) comprenant des câblés de fibres organiques disposés radialement, les bords (5a, 5b) de la carcasse étant repliés autour des tringles (6), une bande de roulement (2) disposée radialement à l'extérieur de la carcasse (5), une nappe sommet (7) comprenant des câblés de fibres organiques et disposée entre la carcasse (5) et la bande de roulement (2), et une pointe de bourrage de talon (8) formée de caoutchouc ayant une dureté JIS-A comprise entre 65 et 95° et placée entre la partie principale de la carcasse et chacune des parties repliées de carcasse (5a, 5b), la nappe sommet (7) étant disposée sur presque toute la largeur de la bande d'enroulement (2), la pointe de bourrage (8) partant de chaque tringle (6) radialement vers l'extérieur dans la région du flanc (3) du pneumatique, caractérisé en ce que les câblés de fibres de la carcasse (5) ont un module d'élasticité à la traction compris entre 500 et 1500 kg/mm$^2$ (50000 et 150000 bars), les câblés de fibres de la nappe sommet (7) ont un module d'élasticité à la traction compris entre 200 et 1000 kg/mm$^2$ (20000 et 100000 bars), et la pointe (8) de bourrage de talon est disposée jusqu'à une zone recouverte par une partie de bord de la nappe sommet.

2. Pneumatique selon la revendication 1, caractérisé en ce que les câblés de la carcasse sont des câblés de polyester ou de rayonne.

3. Pneumatique selon la revendication 1, caractérisé en ce que le module d'élasticité à la traction des câblés de la carcasse est supérieur à celui des câblés de la nappe sommet.

7

# FIG.1

# FIG.2 (a)

# FIG.2 (b)